# EUROPEAN PATENT APPLICATION

(11) **EP 1 324 203 A1**
(43) Date of publication of application: **02.07.2003**
(21) Application number: 01958489.5
(22) Date of filing: 24.08.2001
(51) Int. Cl.: G06F 12/14, G06F 17/60, H04L 9/32

(54) **PERSONAL INFORMATION PROTECTIVE METHOD**

(30) Priority: 06.09.2000 JP 2000270572
(71) Applicant: Sony Corporation, Tokyo 141-0001 (JP)
(72) Inventor: Miyagawa, Yuichi, c/o Sony Corporation, Tokyo 141-0001 (JP)
(74) Representative: Horner, David Richard
(86) International application number: JP0107284
(87) International publication number: WO02021284

(57) **Abstract**

Personal information of members (10) of a provider (20) are protected when the members (10) have an access to the internet. A provider (20) issues an ID number to a member (10) at the time of making a contract, and issues an ID_{P} which corresponds to the ID number to have an access to a virtual shop (30) on the internet and manages the ID_{P} so as to manage personal information of the member (10), and the member (10) has an access to the virtual shop (30) on the internet using the ID_{P} which is issued when the member (10) has an access to the provider (20) using the ID number. That is, since members (10) of a provider (20) use ID_{P} owned by the provider (20) when the members (10) have an access to the internet, personal information of members (10) of the provider (20) can be protected. Furthermore, since the provider (20) ascertains the identity of the members (10) and guarantees solvency of charge of the members (10) when the members (10) purchase goods or information at the virtual shops (30) on the WEB site, the safety and certainty of commerce can be secured for the members (10) as well as for the virtual shops (30) on the WEB site.

## Description

### Technical Field

The present invention relates to a method for protecting personal information of members of a provider on the internet.

### Background Art

The recent significant diffusion of the internet makes it possible to obtain information of various genres from the WEB site of the internet around the world, and to purchase desirable goods or information by having an access to virtual shops on the WEB site. Members who have made a contract with a provider can have an access to the WEB site of the internet around the world using computers via telephone lines, etc.

In obtaining information of various genres from the WEB site and purchasing desirable goods or information at virtual shops on the WEB site, a member who has an access to the WEB site of the internet may be required to input his personal information such as name, address, telephone number, electric mail address, credit card number for purchasing goods, etc. into the WEB site so that a provider makes a data base for the member, and that the safety and certainty of commerce is secured.

However, a member who is required to input his personal information into the WEB site is afraid lest his personal information should be abused, or lest his personal information should be stolen or revised during the personal information is being transmitted via the network, since the member cannot verify the existence of actual workers on the WEB site, which may prevent the diffusion of the internet business.

In order to cope with the anxiety, methods of transmitting personal information after encrypting the information, and payment on arrival or paying charge for goods when the goods are actually delivered by a deliverer are utilized. However, there is a possibility of encrypted personal information being undesirably decrypted. Also, at least name and address as personal information have to be disclosed to a virtual shop on the WEB site which delivers goods so that the goods are actually delivered. So, these methods cannot completely remove the anxiety of members of a provider.

Furthermore, another method of inputting an ID number combining numbers and alphabets which is issued to a member by a provider may be employed instead of actually inputting name, electric mail address, etc. However, as the member constantly has accesses to the internet using the ID number so as to purchase goods or to search information, even though name and address of the member cannot be identified, it is difficult to completely protect information of the member's hobby and taste or what the member is interested in who uses the ID number.

Also, in addition to the above problems, a member of a provider is prone to hesitate about inputting extra personal information to the WEB site other than least necessary personal information which is indispensable to receiving service when the member has an access to the internet.

On the other hand, at the side of a virtual shop on the WEB site which sells goods or information to a member who has an access to the shop, if the personal information of a member who purchases goods or information such as name, address, credit card number are not clarified, workers of the virtual shop are afraid that the member has solvency of charge or not, and that charge can surely be collected in exchange for goods or information, which may also prevent the diffusion of the internet business.

Furthermore, persons who can have an access to the internet are limited to those who own a personal computer at their houses or their places of employment and have made a contract with a provider personally or corporately. And it is difficult for those who are not well acquainted with the technique or processing to retrieve information and purchase goods at virtual shops on the WEB site of the internet.

### Disclosure of the Invention

Accordingly, the present invention has an object to overcome the above-mentioned drawbacks of the prior art by providing a method for protecting personal information of members of a provider when the members have an access to the internet.

Furthermore, the present invention has another object to secure the safety and certainty of commerce for the members as well as for virtual shops on the WEB site when the members purchase goods or information at the virtual shops.

Furthermore, the present invention has another object to enable persons who do not own a personal computer or who do not make a contract with a provider to have an access to the internet and purchase goods or information at the virtual shops on the WEB site without using the difficult technique or processing.

Furthermore, the present invention has another object to enable the members to effectively retrieve necessary information and goods in having an access to the internet.

Furthermore, the present invention has another object to enable a provider to easily profile the members and arrange virtual members on the WEB site of the internet along with the virtual members' hobby and taste by protecting personal information of the members and prompting the members to input their personal information such as the members' hobby and taste to the WEB site.

The above object can be attained by providing a method for protecting personal information, wherein a provider issues an ID number to a member at the time of making a contract, and manages an ID_{P} for accessing virtual shops on the internet corresponding to said ID number and manages personal information of the member, and wherein the member accesses the virtual shop on the internet by using the ID_{P} which is issued when the member accesses the provider using the ID number.

That is, according to the present invention, since the member of the provider uses ID_{P} owned by the provider when the member has an access to the internet, the personal information of the member of the provider can be protected. Furthermore, according to the present invention, since the provider ascertains the identity of the member and guarantees solvency of charge of the member when the member purchases goods or information at the virtual shop on the WEB site, the safety and certainty of commerce can be secured for the member as well as for the virtual shop on the WEB site.

Furthermore, according to the method for protecting personal information, when a noncontractual member accesses the virtual shop from a dedicated terminal via the provider to perform commerce, the provider guarantees solvency of charge of the noncontractual member and concludes the commerce without disclosing personal information of the noncontractual member by carrying out payment confirmation using a payment-confirming apparatus connected to the dedicated terminal. Thus, persons who do not own a personal computer or who do not make a contract with a provider can have an access to the internet and purchase goods or information at the virtual shops on the WEB site without using the difficult technique or processing.

Furthermore, according to the method for protecting personal information, since the provider prepares a plurality of virtual characters with characteristics, the member can efficiently retrieve necessary information and goods when the member have an access to the internet.

Furthermore, according to the method for protecting personal information, the provider can easily profile the members and arrange virtual members on the WEB site of the internet along with the virtual members' hobby and taste by protecting personal information of the members and prompting the members to input their personal information such as the members' hobby and taste to the WEB site.

### Brief Description of the Drawings

FIG. 1 shows a block diagram of an electronic commerce system employing the present invention.
FIG.2 shows an embodiment of the present invention, and shows a flow chart of a method for protecting personal information of a member of a provider when the member retrieves and purchases goods or information at a virtual shop on the internet using ID owned by the provider.
FIG.3 shows an embodiment of the present invention, and shows a flow chart of a method for protecting personal information of a noncontractual member who does not make a contract with a provider when the noncontractual member retrieves and purchases goods or information at a virtual shop on the internet.
FIG.4 shows an embodiment of the present invention, and shows a flow chart of a method for efficiently retrieving necessary information and goods using a plurality of virtual characters prepared by a provider.
FIG.5 shows an embodiment of the present invention, and shows a schematic view of a method for efficiently retrieving necessary information and goods using a plurality of virtual characters with characteristics prepared by a provider.
FIG.6 shows an embodiment of the present invention, and shows a flow chart of a method for protecting a member from troubles during commerce by showing the member trouble history information of commerce and requiring the member to pay an insurance fee in accordance with degrees of risks.
FIG.7 shows an embodiment of the present invention, and shows a schematic view of a method for arranging a virtual myself on the WEB site.
FIG.8 shows an embodiment of the present invention, and shows a schematic view of a method for efficiently putting advertisement and publicity for members in accordance with hobbies and tastes of the members.
FIG. 9 shows an embodiment of the present invention, and shows a flow chart of a method for delivering goods to a member from a virtual shop on the WEB site while protecting personal information of the member.
FIG.10 shows an embodiment of the present invention, and shows a flow chart of a method for delivering goods from a virtual shop on the WEB site and enabling a member to receive the goods at a convenience store while protecting personal information of the member.

### Best Mode for Carrying Out the Invention

The method for protecting personal information according to the present invention will further be described below concerning the best modes for carrying out the present invention with reference to the accompanying drawings.

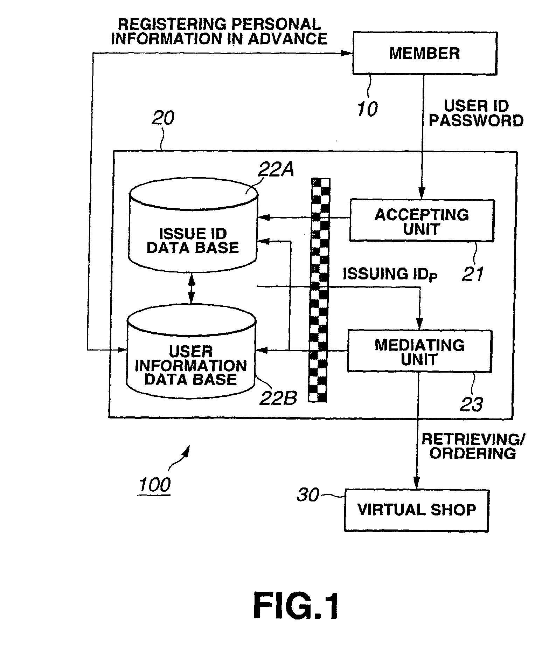

The present invention is applied to an electronic commerce system 100 on the internet including a member 10, a provider 20, and a virtual shop 30, as shown in FIG.1.

In the electronic commerce system 100, the provider 20 includes an accepting unit 21 for accepting an access from a client via the internet, an issue ID data base 22A for issuing an ID number to the member 10 at the time of making a contract, and issuing an ID_{P} (The ID_{P} is a combination of characters such as numbers or alphabets which can identify the member 10, and a plurality of ID_{P} are prepared by the provider 20.) to have an access to the virtual shop 30 on the internet at a request of the member 10 and managing the ID_{P}, a user information data base 22B for managing personal information such as name, age, address, telephone number, hobby, taste, credit card number, bank account, etc. of the member 10, a mediating unit 23 for connecting the member 10 and the virtual shop 30 on the internet using the ID_{P} at a request of the member 10.

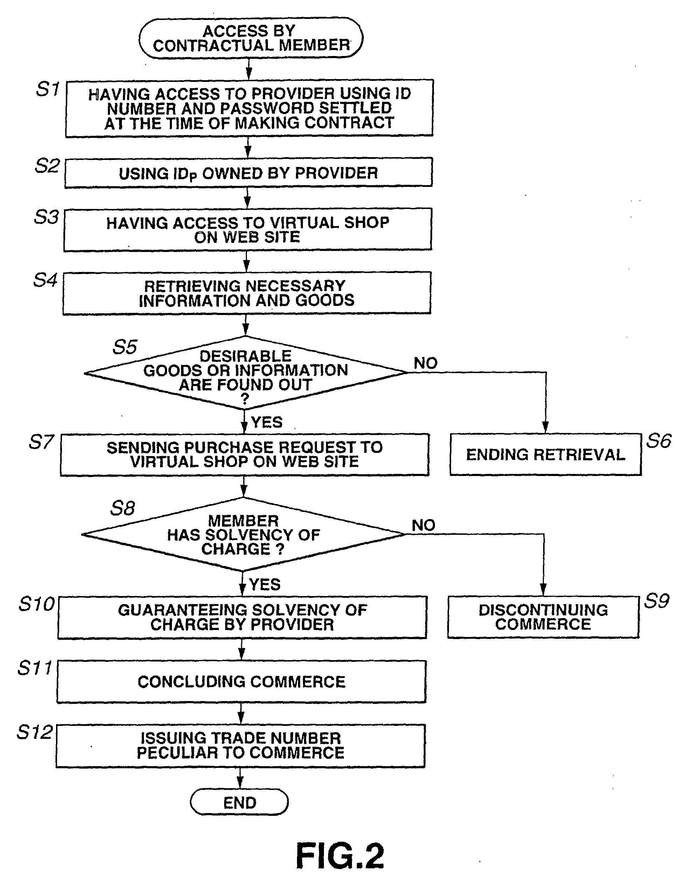

In the electronic commerce system 100, an electronic commerce is performed in accordance with a processing shown in FIG.2.

The member who has made a contract with the provider 20, namely the member 10, has an access to the provider 20 using an ID number and a password which are settled between the member 10 and the provider 20 at the time of making a contract (step S1), then the member 10 uses the ID_{P} owned by the provider 20 which is prepared by the provider 20 in advance (step S2), then the member 10 has an access to the virtual shop 30 on the WEB site (step S3), and then the member 10 retrieves necessary information and goods at the virtual shop 30 on the WEB site (step S4).

Then, the member 10 determines whether or not he can find out desirable goods or information that he wants to purchase (step S5). In case the determination result at the step S5 is NO, that is, in case the member 10 cannot find out desirable goods or information, the member 10 ends the retrieval (step S6). On the other hand, in case the determination result at the step S5 is YES, that is, in case the member 10 can find out desirable goods or information, the member 10 sends a purchase request or a request for purchasing the goods or information to the virtual shop 30 on the WEB site using the ID_{P} owned by the provider 20 (step S7).

Then, the provider 20 ascertains the identity of the member 10 (identification of real name and address) and determines whether or not the member has solvency of charge based on personal information such as credit card number, bank account, etc., which has been declared in advance (step S8). In case the determination result at the step S8 is NO, that is, in case the provider 20 cannot guarantee solvency of charge of the member 10, the provider 20 discontinues the commerce (step S9). On the other hand, in case the determination result at the step S8 is YES, that is, in case the provider 20 can determines that the member 10 has solvency of charge based on the personal information such as credit card number, bank account, etc., which has been declared in advance, the provider 20 guarantees solvency of charge of the member 10 (step S9), then the provider 20 concludes the commerce (step S10), then the provider 20 issues a trade number peculiar to the commerce, and then the commerce is ended.

With the electronic commerce system 100, the member 10 can order goods by using only the ID_{P} owned by the provider 20, and can purchase goods or information without disclosing the personal information to the virtual shop 30 on the WEB site.

That is, in having an access to the internet and purchasing goods or information, the member 10 ofthe provider 20 can protect personal information (name, age, human race, sex, address, telephone number, hobby, taste, credit card number, bank account, property, family members, etc.) by using the ID_{P} owned by the provider 20 instead of inputting personal name and electric mail address.

Thus, the member 10 who has made a contract with the provider 20 can have an access to the internet to search for necessary information and purchase desired goods or electronic data without inputting personal information or name, age, human race, sex, address, telephone number, hobby, taste, credit card number, bank account, property, family members, etc. So, the personal information which is input when utilizing the virtual shop 30 on the WEB site whose actual workers are not verified cannot be abused. Also, in having an access to the internet, the personal information cannot be stolen by another person or abused.

Since the provider 20 ascertains the identity of the member 10 (identification of real name and address) and guarantees solvency of charge of the member 10 based on personal information such as credit card number, bank account, etc., which has been declared in advance, commerce between the member 10 and the virtual shop 30 on the WEB site becomes secured and the personal information of the member 10 can be protected.

Also, the provider 20 accepts an access from a member who does not make a contract with the provider 20 (a noncontractual member) from a dedicated terminal located at convenience stores in the whole town.

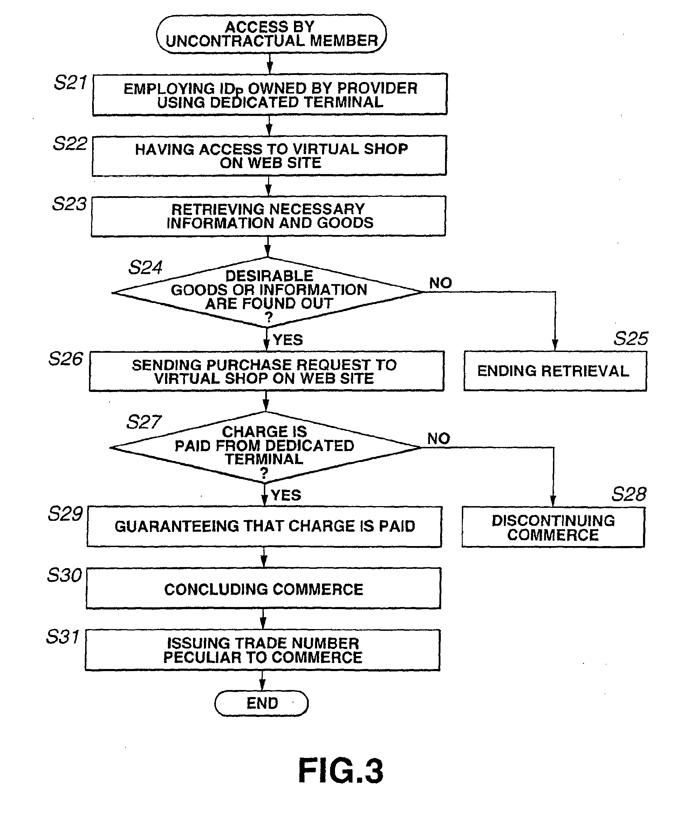

In the electronic commerce system 100, commerce between the provider 20 and a member who does not make a contract with the provider 20 (a noncontractual member) is performed in accordance with a processing shown in FIG.3.

A noncontractual member or a member who does not make a contract with the provider 20 employs the ID_{P} owned by the provider 20 using a dedicated terminal located at convenience stores in the whole town via the provider 20 (step S21), then the noncontractual member has an access to the virtual shop 30 on the WEB site (step S22), and then the noncontractual member retrieves necessary information and goods at the virtual shop 30 on the WEB site (step S23).

Then, the noncontractual member determines whether or not he can find out desirable goods or information that he wants to purchase (step S24). In case the determination result at the step S24 is NO, that is, in case the noncontractual member cannot find out desirable goods or information, the noncontractual member ends the retrieval (step S25). On the other hand, in case the determination result at the step S24 is YES, that is, in case the noncontractual member can find out desirable goods or information, the noncontractual member sends a purchase request to the virtual shop 30 on the WEB site using the ID_{P} owned by the provider 20, and pays charge for the goods or information using an automated teller machine connected to the dedicated terminal or a prepaid card (step S26).

Then, the provider 20 determines whether or not the charge for the goods or information is paid from the dedicated terminal (step S27). In case the determination result at the step S27 is NO, that is, in case the charge is not paid, the provider 20 discontinues the commerce (step S28). On the other hand, in case the determination result at the step S27 is YES, that is, in case the charge is paid, the provider 20 guarantees that the noncontractual member who sent the purchase request using the ID_{P} owned by the provider 20 paid the charge for the goods or information (step S29), then the provider 20 concludes the commerce (step S30), then the provider 20 issues a trade number peculiar to the commerce (step S31), and then the commerce is ended.

So, the electronic commerce system 100 enables a person who does not own a personal computer at his house or his place of employment or who does not make a contract with a provider personally or corporately to have an access to the internet and purchase goods or information at virtual shops on the WEB site of the internet.

At this time, the personal information of the noncontractual member is never known to the virtual shop 30 on the internet.

Furthermore, the provider 20 of the electronic commerce system 100 may prepare a plurality of virtual characters which are well informed about virtual shops 30 to be accessed, each of which virtual characters biuniquely corresponds to each of the ID_{P} owned by the provider 20, so as to enable the member 10 to retrieve information related to the virtual shops 30 on the internet by virtually requiring the virtual characters to retrieve the information.

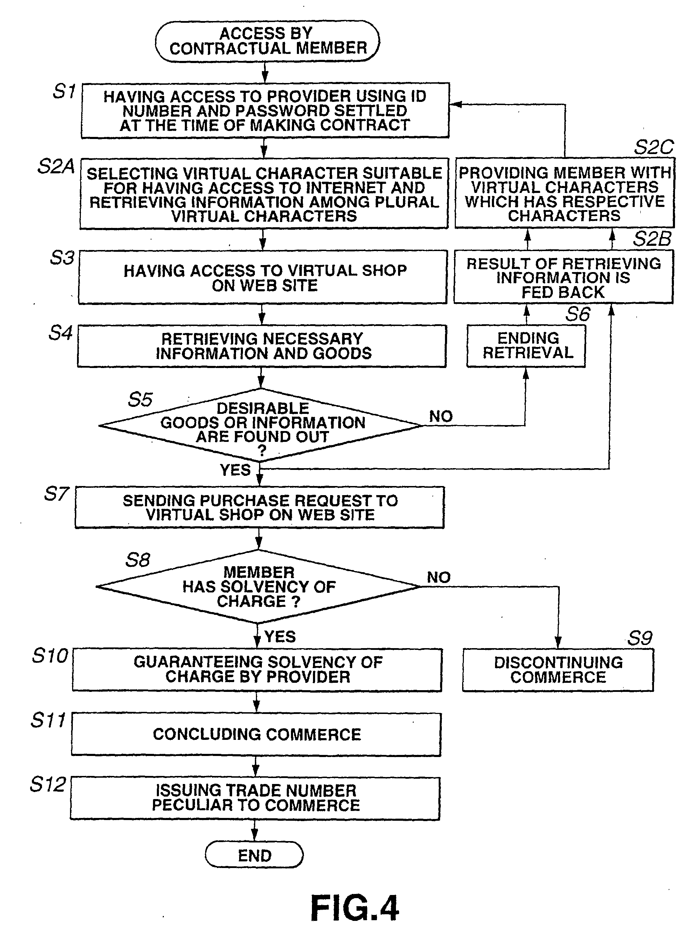

In this case, as shown in FIG.4, the member 10 who has made a contract with the provider 20 has an access to the provider 20 using an ID number and a password which are settled between the member 10 and the provider 20 at the time of making a contract (step S1), and selects a virtual character which is suitable for having an access to the internet and retrieving information among the plural virtual characters prepared by the provider 20 in advance which have respective characters (the plural virtual characters each biuniquely corresponds to each of the ID_{P} owned by the provider 20 and each has character of being well acquainted with specified information such as sports information, public entertainments information, etc.) (step S2A). Then, the member 10 virtually requires the selected virtual character to retrieve information, which makes it possible to retrieve goods or information with high quality.

The result of retrieving information by the virtual character is fed back (step S2B), and the provider 20 provides the member 10 with the virtual characters which has respective characters (step S2C). Thus, retrieval history of goods or information formed by the provider 20 or the previous member 10 is accumulated as data base to the virtual characters prepared by the provider 20. And, when the member 10 selects the virtual characters in retrieving similar goods or information, the member 10 is efficiently provided with information concerning the virtual shops 30 on the WEB site.

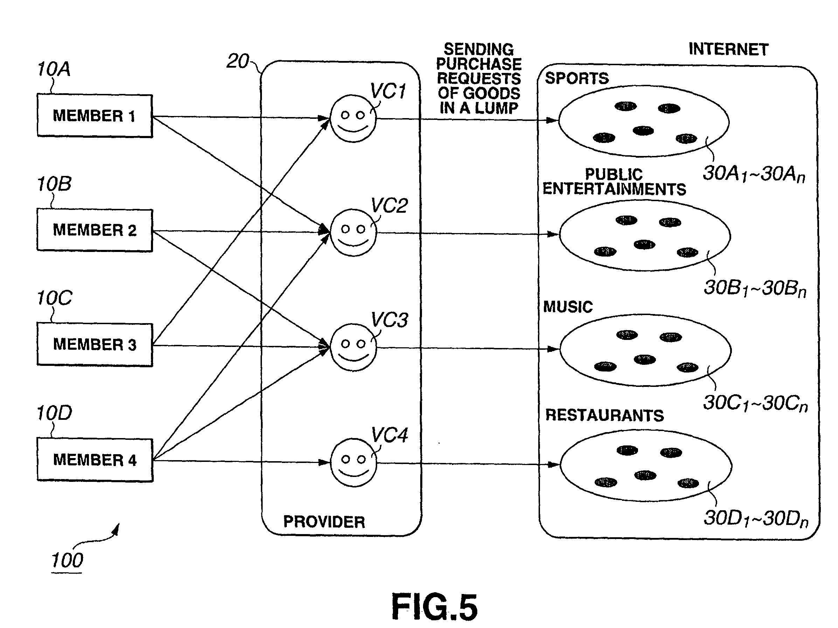

Furthermore, as shown in FIG.5, the provider 20 of the electronic commerce system 100 accepts purchase requests of goods sent by plural members 10 at virtual shops 30A to 30D on the WEB site using a plurality of virtual characters VC1 to VC4 so that the purchase requests of goods sent by the plural members 10 to the virtual shops 30 on the same WEB site can be sent to the virtual shops 30 in a lump using the virtual characters VC1 to VC4.

In this case, in having accesses to the internet, members 10A to 10D who have made a contract with the provider 20 have accesses to the plural virtual characters VC1 to VC4 (the plural virtual characters each has character of being well acquainted with specified information such as sports information, public entertainments information, etc.) prepared by the provider 20 in advance, and then select the virtual shop 30 in accordance with goods or information that the members 10 want to retrieve among virtual shops 30A₁ to 30Aₙ which are related to sports, virtual shops 30B₁ to 30Bₙ which are related to public entertainments, virtual shops 30BC to 30Cₙ which are related to music, and virtual shops 30D₁ to 30Dₙ which are related to restaurants.

The virtual characters VC1 to VC4 may be caused to have characteristics about accuracy of retrieval. That is, for example, the virtual characters VC1 to VC4 may be caused to retrieve goods or information rapidly, but the retrieved goods or information is not accurate. Otherwise, the virtual characters VC1 to VC4 may be caused to retrieve goods or information of high quality with enough time, and the retrieved goods or information is accurate and covers all the concerning goods or information. Thus, the virtual characters VC1 to VC4 prepared by the provider 20 can be used properly in accordance with purposes of accesses by the members 10.

Also, since the virtual characters VC1 to VC4 order purchase requests of goods sent by the plural members 10A to 10D in a lump, it becomes possible to negotiate with the virtual shops 30A₁ to 30Aₙ, 30B₁ to 30Bₙ, 30BC to 30Cₙ, and 30D₁ to 30Dₙ on volume discount. That is, in case the plural members 10A to 10D who have made a contract with the provider 20 retrieve goods or information and want to purchase similar goods or information, by putting together orders from the members 10A to 10D to the virtual shops 30A₁ to 30Aₙ, 30B₁ to 30Bₙ, 30BC to 30Cₙ, and 30D₁ to 30Dₙ on the same WEB site every predetermined period, a large quantity of similar goods or information are required to be purchased at one time from the virtual shops 30A₁ to 30Aₙ, 30B₁ to 30Bₙ, 30BC to 30Cₙ, and 30D₁ to 30Dₙ. Thus, negotiation on volume discount due to mass purchase becomes possible.

Furthermore, the provider 20 of the electronic commerce system 100 manages history of commerce which are formed when the plural virtual characters have accesses to the virtual shops on the WEB site and perform the commerce so as to manage trouble information of the commerce, and provides the member 10 who is to have an access to the virtual shops on the same WEB site next time with the history and the trouble information when the member 10 performs commerce.

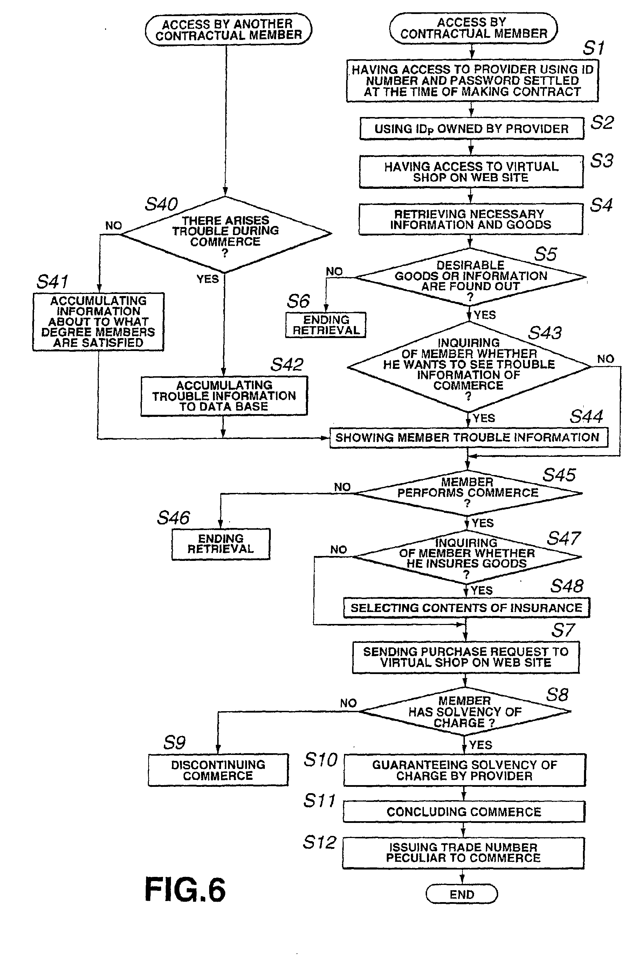

That is, as shown in FIG.6, a plurality of members 10 have accesses to virtual shops on the WEB site using the same virtual characters, and retrieve goods or information. On the other hand, the provider 20 monitors if there arises trouble during commerce (step S40), and the provider 20 accumulates information about to what degree the members 10 are satisfied with the commerce (step S41), and the provider 20 accumulates trouble information (information about trouble that goods are not delivered even though charge is paid, trouble that delivered goods are different from those which the members 10 ordered, trouble that delivered goods are inferior in quality, etc) (step S42). Next, when the member 10 who is to have an access to the virtual shops on the same WEB site next time performs commerce, the provider 20 inquires of the member 10 whether or not he wants to see the trouble information of commerce (step S43), in case the member 10 wants to sea the trouble information, the provider 20 shows the member 10 the trouble information (step S44).

The member 10 determines whether or not he performs the commerce (step S45), in case the member 10 determines that he does not perform the commerce, the member 10 ends the retrieval (step S46). Thus, the member 10 can be prevented from being involved in troubles during the commerce in advance by obtaining the trouble information as reference.

Furthermore, in the electronic commerce system 100, an insurance system may be set up in view of frequency of troubles during commerce and degrees of risks of commerce based on history of past commerce at the virtual shops 30 on the WEB site.

For example, in case an insurance fee of 1,000 yen is paid in addition to charge, and goods delivered from the virtual shop 30 on the WEB site are broken or are different from what the member 10 imagines, the total charge is insured as long as the goods are returned to the virtual shop 30. Also, in case an insurance fee of only 500 yen is paid in addition to charge and the same trouble happens, half of the charge is insured as long as the goods are returned to the virtual shop 30.

The provider 20 inquires of the member 10 who determines that he performs the commerce at step S45 whether or not he insures goods that he wants to purchase (step S47), then in case the member 10 wants to insures the goods, he selects the contents of the insurance (step S48).

In this way, the provider 20 manages the history of the commerce which are formed when the plural virtual characters have accesses to the virtual shops on the WEB site and perform the commerce, and classifies risks of the commerce in accordance with the trouble information of the commerce, and requires the member 10 to pay an insurance fee in addition to charge of goods so as to insure the charge in case a trouble happens.

Thus, in having accesses to virtual shops 30 on the WEB site, the member 10 of the electronic commerce system 100 can obtain information about past troubles which happened between the members 10 and virtual shops 30 on the WEB site during commerce. Also, in performing commerce with virtual shops 30 on the WEB site whose existence cannot be verified, the member 10 can compensate damages caused by troubles by insuring charge.

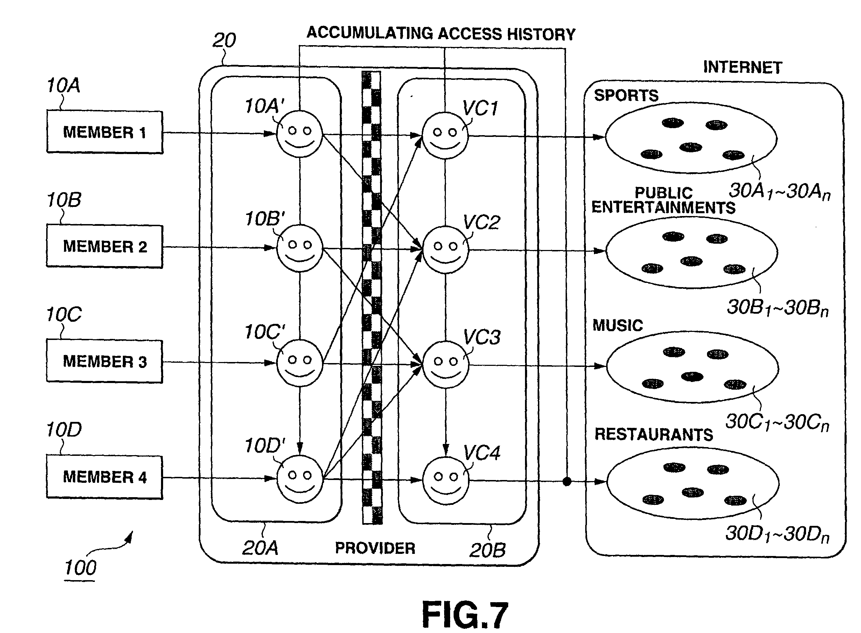

Furthermore, in the electronic commerce system 100, as shown in FIG.7, the members 10A to 10D who have made a contract with the provider 20 can arrange virtual members 10A' to 10D' in a first managing server 20A of the provider 20. The virtual members 10A' to 10D' virtually require the virtual characters VC1 to VC4 arranged in a second managing server 20B of the provider 20 to retrieve goods or information that the members 10A to 10D want to obtain, then the retrieval result is accumulated to database of the virtual members 10A' to 10D'. Then, personal hobby and taste are extracted from the data base.

Furthermore, the provider 20 can arrange virtual members 10A' to 10D' who can represent the characteristics of the members 10A to 10D more precisely in addition to the accumulated data by causing the members 10A to 10D to input their additional personal information such as their hobbies and tastes respectively.

In the provider 20, data base of the virtual characters VC1 to VC4 and that of the virtual members 10A' to 10D' are managed by different servers 20A and 20B, respectively. Thus, in retrieving or purchasing goods or information at the virtual shops 30A₁ to 30Aₙ, 30B₁ to 30Bₙ, 30BC to 30Cₙ, and 30D₁ to 30Dₙ on the WEB site, the virtual shops 30A₁ to 30Aₙ, 30B₁ to 30Bₙ, 30BC to 30Cₙ, and 30D₁ to 30Dₙ have accesses to the data base of the virtual members 10A' to 10D'. So, there is no fear that the personal information of the members 10A to 10D shall be stolen.

Thus, the members 10A to 10D of the electronic commerce system 100 can perform electronic commerce using the virtual members 10A' to 10D' arranged in the first managing server 20A and the virtual characters VC1 to VC4 arranged in the second managing server 20B as experts on the network or virtual individuals having hobbies and tastes of the members 10A to 10D.

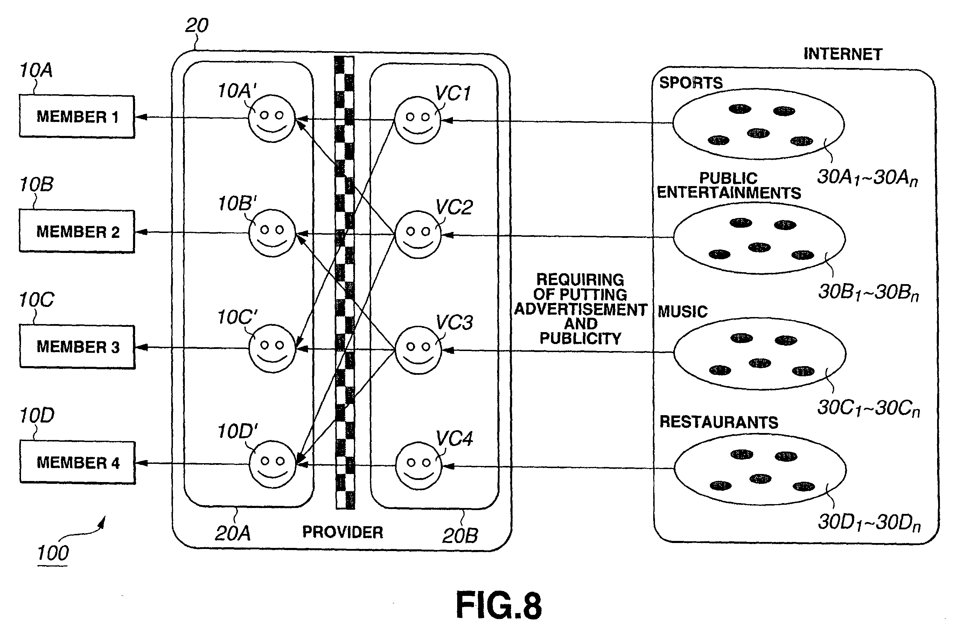

Furthermore, in the electronic commerce system 100, as shown in FIG.8, the virtual shops 30A₁ to 30Aₙ, 30B₁ to 30Bₙ, 30BC to 30Cₙ, and 30D₁ to 30Dₙ on the WEB site can require the provider 20 or the virtual characters VC1 to VC4 who frequently have accesses to the provider 20 to put advertisement and publicity for only members 10 who are interested in the goods or information of the virtual shops.

The provider 20 which accepts the request puts advertisement and publicity for only members 10A to 10D who probably are interested in the goods or information via the virtual members 10A' to 10D' in accordance with hobbies and tastes of the members 10A to 10D extracted from the accumulated information.

Thus, it becomes possible to put advertisement and publicity for only members 10 who are interested in the goods or information and have much possibility of their purchasing the goods or information instead of putting advertisement and publicity for unspecified members 10.

In the electronic commerce system 100, after the commerce is concluded at step S11, the provider 20 issues a trade number peculiar to the commerce to the member 10 and the virtual shop 30 at step S12.

By issuing unique trade numbers for respective commerce, it becomes possible to identify orders from the members 10.

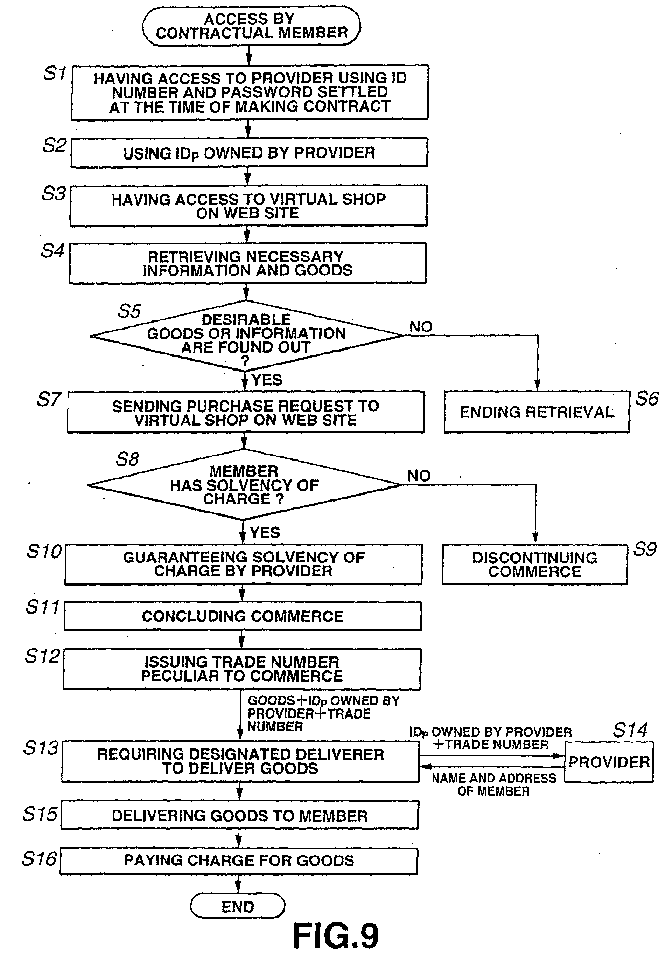

In performing commerce, the provider 20 designates a deliverer and makes a contract for keeping secrets with the designated deliverer in advance. When goods which the member 10 requires to purchase are prepared, as shown in FIG.9, the virtual shop 30 on the WEB site requires the designated deliverer to deliver the goods with the ID_{P} owned by the provider 20 which is used by the member 10 and the trade number attached thereto (step S13).

The deliverer who is required to deliver the goods inquires of the provider 20 about the ID_{P} owned by the provider 20 which is used by the member 10 and the trade number to receive information only about name and address of the member 10 who sent the purchase request (step S14), and then the deliverer delivers the goods to the member 10 (step S15). Thus, the member 10 receives the goods and pays charge for the goods (step S16).

In the commerce, personal information of the member 10 is not known to the virtual shop 30, and only name and address of the member 10 is disclosed to the deliverer.

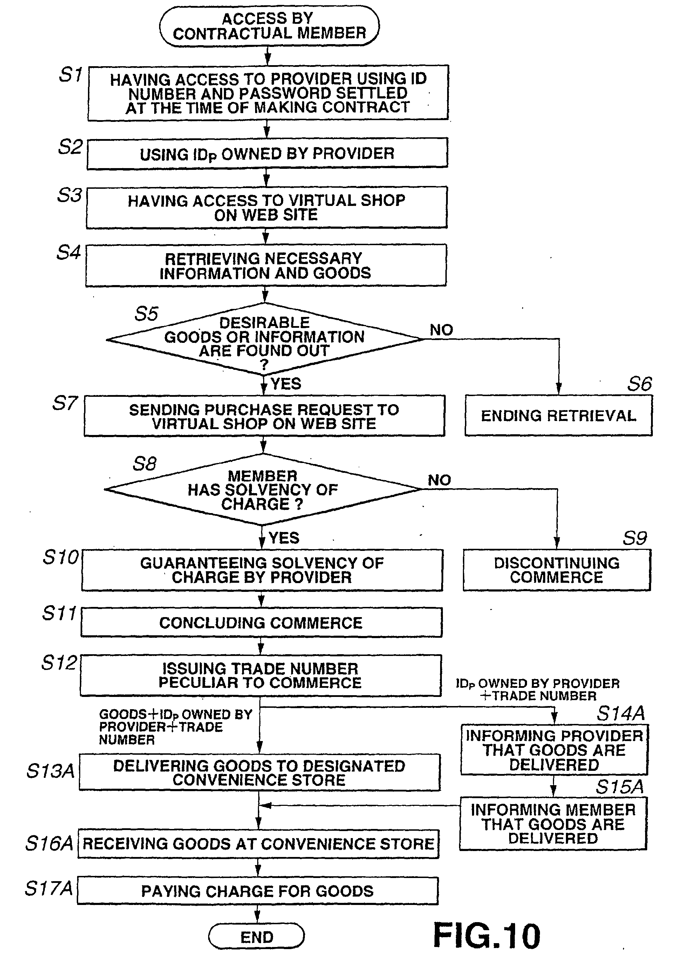

Furthermore, in the electronic commerce system 100, the member 10 can receive goods at an actual shop such as a convenience store which really exists in accordance with a processing shown in FIG.10.

That is, when goods which the member 10 requires to purchase are prepared, the virtual shop 30 delivers the goods to a convenience store which is designated as a desired delivery place in advance with the ID_{P} owned by the provider 20 which is used by the member 10 and the trade number attached thereto (step S13A), and then the virtual shop 30 informs the provider 20 that goods which the member 10 requires to purchase are delivered with the ID_{P} owned by the provider 20 and the trade number attached thereto (step S14A).

The provider 20 who receives the delivery notice confirms the member 10 who sent the purchase request based on the trade number, and informs the member 10 that the goods are delivered to the designated convenience store (step S15A).

Then, the member 10 goes to the designated convenience store and informs the store of the trade number to receive the goods (step S16A), and then the member 10 pays charge for the goods (step S17A).

In the commerce, personal information of the member 10 is never known to the virtual shop 30.

### Industrial Applicability

The present invention is applicable to a method for protecting personal information of members of a provider, which is implemented by the provider on the internet.

## Claims

1. A method for protecting personal information, wherein
a provider issues an ID number to a member at the time of making a contract, and
manages an ID_{P} for accessing virtual shops on the internet corresponding to said ID number and manages personal information of the member, and wherein
the member accesses the virtual shop on the internet by using the ID_{P} which is issued when the member accesses the provider using the ID number.

2. The method for protecting personal information as set forth in Claim 1, wherein the provider guarantees solvency of charge of the member and concludes commerce without disclosing the personal information of the member who accesses the virtual shop.

3. The method for protecting personal information as set forth in Claim 1, wherein, when a noncontractual member accesses the virtual shop from a dedicated terminal via the provider to perform commerce, the provider guarantees solvency of charge ofthenoncontractual member and concludes the commerce without disclosing personal information of the noncontractual member by carrying out payment confirmation using a payment-confirming apparatus connected to the dedicated terminal.

4. The method for protecting personal information as set forth in Claim 1, wherein the provider prepares a plurality of virtual characters which are specialized in information related to the virtual shops to be accessed with reference to said ID_{P} owned by the provider in one to one relation, and the member carries out information-retrieving related to the virtual shops on the internet by virtually requesting retrieval of information to said virtual characters.

5. The method for protecting personal information as set forth in Claim 1, wherein the provider selects a virtual character which has suitable retrieving ability among the plural virtual characters which have different retrieving abilities, and requires the selected virtual character to retrieve information.

6. The method for protecting personal information as set forth in Claim 4, wherein purchase requests of goods sent by plural members at virtual shops on the WEB site are accepted using the plural virtual characters so that the purchase requests of goods sent by the plural members to the virtual shops on the same WEB site can be sent to the virtual shops in a lump using the virtual characters.

7. The method for protecting personal information as set forth in Claim 4, wherein the virtual characters manage history of commerce which are formed when the plural virtual characters prepared by the provider access the virtual shops on the WEB site and perform the commerce so as to manage trouble information of the commerce, and provides the member who is to access the virtual shops on the same WEB site next time with the history and the trouble information when the member performs commerce.

8. The method for protecting personal information as set forth in Claim 7, wherein the provider manages the history of the commerce which are formed when the plural virtual characters access the virtual shops on the WEB site and perform the commerce, and classifies risks of the commerce in accordance with the trouble history of the commerce, and requires the member to pay an insurance fee in addition to purchasing charge of goods so as to insure the charge in case a trouble happens.

9. The method for protecting personal information as set forth in Claim 4, wherein the members are profiled by arranging virtual members in the provider in one to one relation to each of the members, and accumulating history information of retrieved information and goods to the virtual members by accessing to the internet utilizing said virtual characters.

10. The method for protecting personal information as set forth in Claim 9, wherein virtual members who can represent the characteristics of the members more precisely can be arranged by causing the members to input their additional personal information such as their hobbies and tastes to the virtual members.

11. The method for protecting personal information as set forth in Claim 9, wherein management of the data of said virtual members and the data accumulated by accessing to the internet with regard to the characters are carried out by different servers.

12. The method for protecting personal information as set forth in Claim 9, wherein the provider provides information in accordance with hobbies and tastes of said member extracted from profile of said virtual members.

13. The method for protecting personal information as set forth in Claim 1, wherein the provider issues one number per one trade at every enacted trade.

14. The method for protecting personal information as set forth in Claim 12, wherein, the virtual shop on the WEB site which receives an order from the member requires delivery of goods to a designated deliverer who has contracts on confidentiality in advance between the provider while attaching the ID used by the member and the trade number issued to one per one trade in addition to said ID owned by the provider when carrying out commerce, and the deliverer inquires of the provider about the ID used by the member and the trade number issued to one per one trade in addition to said ID owned by the provider when carrying out commerce to receive information only about name and address of the member so as to deliver the goods.

15. The method for protecting personal information as set forth in Claim 12, wherein the provider informs the virtual shop on the WEB site of an actual shop which is registered in advance or designated at the time of purchasing goods by the member, and the virtual shop which receives an order from the member delivers the goods to the actual shop while attaching the ID used by the member and the trade number issued to one per one trade in addition to said ID owned by the provider when carrying out commerce, and the member informs the actual shop of the trade number which is issued by the provider at the time of ordering the goods and pays charge for the goods so as to receive the goods.
